# EUROPÄISCHE PATENTSCHRIFT

(11) **EP 0 800 623 B1**
(45) Veröffentlichungstag und Bekanntmachung des Hinweises auf die Patenterteilung: **16.09.1998**
(21) Anmeldenummer: 95940912.9
(22) Anmeldetag: 21.12.1995
(51) Int. Cl.: F16F 3/087, B65D 83/04

(54) **KUNSTSTOFFEDER**
PLASTIC SPRING
RESSORT EN PLASTIQUE

(30) Priorität: 30.12.1994 AT 24309/49
(43) Veröffentlichungstag der Anmeldung: 15.10.1997
(73) Patentinhaber: Haas Beteiligungsgesellschaft mbH, 4050 Traun (AT)
(72) Erfinder: KÖNIG, Helmuth, A-4300 St. Valentin (AT); LEITNER, Günther, A-4614 Marchtrenk (AT)
(74) Vertreter: Hübscher, Heiner, Dipl.-Ing.
(86) Internationale Anmeldenummer: AT9500248
(87) Internationale Veröffentlichungsnummer: WO9621111

(56) Entgegenhaltungen:
- EP-A- 0 199 900
- EP-A- 0 600 123
- FR-A- 2 089 650
- FR-A- 2 194 897
- US-A- 3 319 827
- PATENT ABSTRACTS OF JAPAN vol. 009 no. 313 (M-437) ,10.Dezember 1985 & JP,A,60 147353 (HITACHI KINZOKU KK) 3.August 1985,

## Beschreibung

Die Erfindung bezieht sich auf eine Kunststoffeder, bestehend aus einer über einen Steg an einem Federträger angesetzten Federzunge.

Kunststoffedern sind vielfältig verwendbar und werden beispielsweise bei Tablettenspendern als Rückstellfeder für den Tablettenausstoßer eingesetzt. Diese Kunststoffedern werden meist zusammen mit dem Federträger in einem Arbeitsgang gespritzt und bestehen bisher aus einem bügelförmigen Steg, der am freien Ende in eine Federzunge ausläuft. Aus Sicherheitsgründen muß für die Herstellung der Kunststoffeder bzw. des Federträgers ein Material gewählt werden, das bei Bruch keine Verletzungsgefahr durch scharfe Kanten, spitze Teile od. dgl. mit sich bringt, so daß die Materialeigenschaften des verwendeten Kunststoffs nicht auf die jeweils erforderlichen Federeigenschaften abgestimmt werden können. Die bekannten Kunststoffedern sind daher auch oft zu schwach und können die hinsichtlich des Federweges und der Federkraft gestellten Anforderungen nicht erfüllen.

Der Erfindung liegt somit die Aufgabe zugrunde, diese Mängel zu beseitigen und eine Kunststoffeder der eingangs geschilderten Art zu schaffen, die sich ohne Schwierigkeiten aus demselben Material wie der zugehörende Federträger spritzen lassen und dennoch in ihren Federungseigenschaften an unterschiedliche Bedingungen gut angepaßt werden können.

Die Erfindung löst diese Aufgabe dadurch, daß der Steg gegenüber dem Federträger biegesteif abgestützt ist und vom Steg unterhalb der Federzunge wenigstens eine zur Federzunge gleichgerichtete Zusatz-Federzunge ausgeht. Federzunge und Zusatz-Federzungen bilden ein zusammenwirkendes Federpaket, dessen Federkraft mit zunehmendem Federweg ansteigt, da bei Belastung die sich durchbiegende Federzunge nach einem entsprechenden Federweg von der darunterliegenden Zusatz-Federzunge gestützt wird und sich dann zur Federkraft der Federzunge die Federkraft der Zusatz-Federzunge addiert. Diese Federkraftsteigerung läßt sich durch die Anzahl der Zusatz-Federzungen auf die gewünschten Verhältnisse abstimmen und durch den gegenseitigen Abstand von Federzunge und Zusatz-Federzungen wird der zugehörige Federweg entsprechend beeinflußt. Die Kunststoffeder kann daher aus geeignetem, auch bei höheren Belastungen bruchsicherem Material gespritzt werden, wobei durch die Aussteifung des Steges gegenüber dem Federträger der gefährliche Ansatzbereich des Steges abgesichert wird, und es entsteht dennoch eine in ihren Eigenschaften an die jeweiligen Anforderungen anpaßbare Feder.

Weisen die Federzunge und die Zusatz-Federzungen eine zum Federträger hin abnehmende Länge auf, ergibt sich durch die mit abnehmender Länge zunehmende Steifheit ein mit dem Federweg progressiver Anstieg der Federkraft, wozu noch eine platzsparende, sich unter die Federzunge einschmiegende Anordnung der Zusatz-Federzungen kommt.

Um die Materialeigenschaften gut ausnützen zu können, weisen die Federzunge und die Zusatz-Federzungen eine sich zum freien Zungenende hin verjüngende Breite auf, wodurch sich die Materialspannungen über die Zungenlänge bei Federbelastung vergleichmäßigen lassen.

Vorteilhaft ist es auch, wenn zwischen Steg und Federträger seitliche Stützwangen vorgesehen sind, da diese Stützwangen nicht nur eine entsprechende Stabilität der Stegabstützung mit sich bringen, sondern zwischen den Stützwangen und dem Steg gewissermaßen ein schützendes Gehäuse für die Federzunge und die Zusatz-Federzungen entsteht.

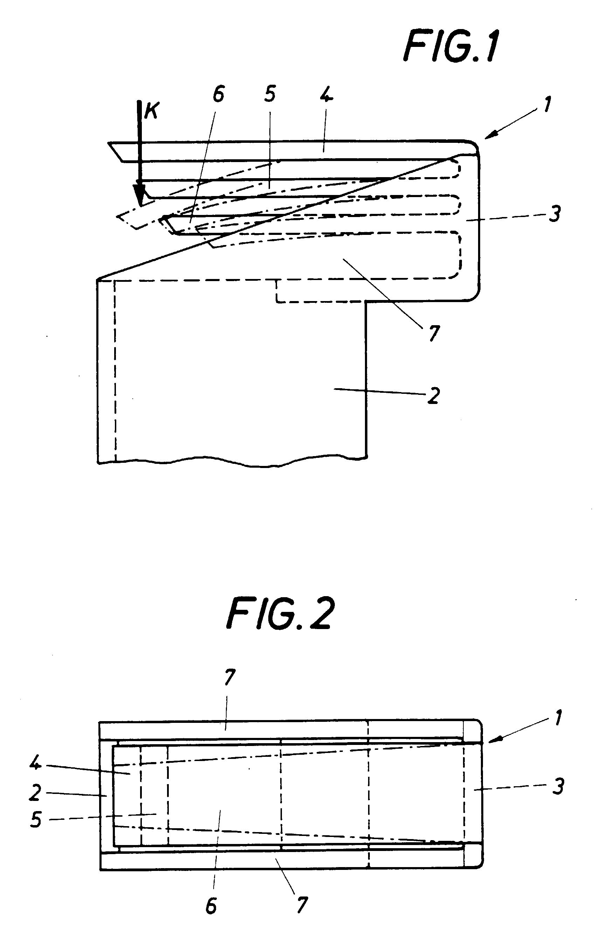

In der Zeichnung ist der Erfindungsgegenstand beispielsweise veranschaulicht, und zwar zeigen
- Fig. 1 und 2: eine erfindungsgemäße Kunststoffeder in schematischer Seitenansicht bzw. Draufsicht.

Eine Kunststoffeder 1, die gemeinsam mit dem Federträger 2, beispielsweise einem Tablettenspendermagazin, gespritzt wird, besteht aus einem am Federträger 2 angeformten Steg 3, der in eine querverlaufende Federzunge 4 übergeht und von dem unterhalb der Federzunge 4 beispielsweise zwei Zusatz-Federzungen 5, 6 in gleicher Richtung vorragen, wobei die Zusatz-Federzungen 5, 6 kürzer als die Federzunge 4 ausgebildet sind und die Länge dieser Zusatzfedem mit zunehmendem Abstand von der Federzunge 4 stufenweise abnimmt. Außerdem können sich die Breiten der Federzunge 4 und der Zusatz-Federzungen 5, 6 zum freien Zungenende hin verjüngen, wie in Fig. 2 strichpunktiert angedeutet. Zur biegesteifen Abstützung ist der Steg 3 mit dem Federträger 2 über seitliche Stützwangen 7 verbunden, wobei durch die Stützwangen 7 und den Steg 3 eine Art Federgehäuse entsteht.

Federzunge 4 und Zusatz-Federzungen 5, 6 bilden ein Federpaket, dessen einzelne Federzungen bei Belastung K stufenweise fortschreitend zusammenwirken, so daß sich in Abhängigkeit vom Federweg eine ansteigende Federkraft ergibt (strichpunktierte Darstellung in Fig. 1). Damit ist es möglich, eine aus demselben Material wie der Federträger gespritzte Kunststoffeder herzustellen, deren Federcharakteristik sich an die jeweiligen Anforderungen hinsichtlich Federweg und Federkraft gut anpassen läßt.

## Patentansprüche

1. Kunststoffeder, bestehend aus einer über einen Steg an einem Federträger angesetzten Federzunge, dadurch gekennzeichnet, daß der Steg (3) gegenüber dem Federträger (2) biegesteif abgestützt ist und vom Steg (3) unterhalb der Federzunge (4) wenigstens eine zur Federzunge gleichgerichtete Zusatz-Federzunge (5, 6) ausgeht.

2. Kunststoffeder nach Anspruch 1, dadurch gekennzeichnet, daß die Federzunge (4) und die Zusatz-Federzungen (5, 6) eine zum Federträger (2) hin abnehmende Länge aufweisen.

3. Kunststoffeder nach Anspruch 1 oder 2, dadurch gekennzeichnet, daß die Federzunge (4) und die Zusatz-Federzungen (5, 6) eine sich zum freien Zungenende hin verjüngende Breite aufweisen.

4. Kunststoffeder nach einem der Ansprüche 1 bis 3, dadurch gekennzeichnet, daß zwischen Steg (3) und Federträger (2) seitliche Stützwangen (7) vorgesehen sind.

## Claims

1. A plastic spring consisting of a spring tongue attached to a spring carrier via a web, characterised in that the web (3) is supported so as to be flexurally stiff relatively to the spring carrier (2) and at least one additional spring tongue (5, 6) extends in the same direction as the spring tongue (4) from the web (3) beneath the spring tongue.

2. A plastic spring according to claim 1, characterised in that the spring tongue (4) and the additional spring tongues (5, 6) have a length which decreases towards the spring carrier (2).

3. A plastic spring according to claim 1 or 2, characterised in that the spring tongue (4) and the additional spring tongues (5, 6) have a width which tapers towards the free tongue end.

4. A plastic spring according to any one of claims 1 to 3, characterised in that lateral support cheeks (7) are provided between the web (3) and the spring carrier (2).

## Revendications

1. Ressort en matière plastique, constitué d'une languette de ressort, appliquée sur un porte-ressort, par l'intermédiaire d'une barrette, caractérisé en ce que la barrette (3) est soutenue avec une rigidité en flexion par rapport au porte-ressort (2), et au moins une languette de ressort additionnelle (5, 6) orientée dans la même direction que la languette de ressort, part de la barrette (3), au-dessous de la languette de ressort (4).

2. Ressort en matière plastique selon la revendication 1, caractérisé en ce que la languette élastique (4) et les languettes de ressort additionnelles (5, 6) ont une longueur allant en diminuant par rapport au porte-ressort (2).

3. Ressort en matière plastique selon la revendication 1 ou 2, caractérisé en ce que la languette de ressort (4) et les languettes de ressort additionnelles (5, 6) ont une largeur allant en s'effilant en direction de l'extrémité de languette libre.

4. Ressort en matière plastique selon l'une des revendications 1 à 3, caractérisé en ce que des joues d'appui (7) latérales sont prévues entre la barrette (3) et le porte-ressort (2).
